# DEMANDE DE BREVET EUROPEEN

(11) **EP 4 477 469 A1**
(43) Date de publication de la demande: **18.12.2024**
(21) Numéro de dépôt: 24180294.1
(22) Date de dépôt: 05.06.2024
(51) Int. Cl.: B60Q 1/04

(54) **SYSTÈME DE MONTAGE D'UN PROJECTEUR EN PARTIE LATÉRALE AVANT D'UN VÉHICULE AUTOMOBILE**

(30) Priorité: 14.06.2023 FR 2306049
(71) Demandeur: Renault s.a.s, 92100 Boulogne Billancourt (FR)
(72) Inventeur: BARREIRO, Emmanuel, 78640 Villiers-saint-Frédéric (FR)

(57) **Abrégé**

Système de montage (1) d'un projecteur en partie latérale avant d'un véhicule automobile, pour insérer le projecteur (2) entre l'aile adjacente (3) et le montant latéral vertical (4) adjacent de la face avant technique, dite FAT, dans un espace latéral (33) ouvert à l'avant de l'aile et sur une longueur d'insertion (d) définie par la longueur d'une partie avancée (31) de la partie supérieure que comprend l'aile, ledit système comprenant :
- des premiers éléments de guidage (210, 300), les uns portés par un support de fixation (20) que comprend ledit projecteur et d'autres par l'aile adjacente (3) et ayant des premières formes complémentaires de guidage (210, 300) selon les directions verticale et longitudinale,
- des deuxièmes éléments de guidage (22, 40), les uns portés par le support de fixation (20) du projecteur et d'autres par ledit montant latéral vertical adjacent (4) de la FAT et ayant des deuxièmes formes complémentaires de guidage (220, 400) selon les directions verticale et longitudinale,
et de sorte que, lors du montage du projecteur de l'avant vers l'arrière selon ladite longueur d'insertion, lesdites premières et deuxièmes formes complémentaires de guidage créent un espacement entre l'extrémité de la partie avancée de la partie supérieure de l'aile et la partie du projecteur située en vis-à vis, et le projecteur est en appui sur au moins un desdits premiers éléments de guidage portés par l'aile adjacente et sur au moins un desdits deuxièmes éléments de guidage portés par le montant latéral adjacent de la FAT.

## Description

L'invention concerne un système de montage d'un projecteur en partie latérale avant d'un véhicule automobile, entre l'aile adjacente et la face avant technique. Le terme « projecteur » doit être compris comme « projecteur de lumière », ou autrement dit un phare.

La partie avant d'un véhicule automobile comprend une structure support que l'on appelle dans le métier « face avant technique », ou couramment par son acronyme « FAT », qui se trouve en partie avant du véhicule, en particulier en avant du bloc moteur, et qui a notamment pour fonction de supporter différents composants dont certains organes dédiés aux échanges thermiques. Cette structure comporte usuellement deux montants latéraux verticaux et un montant transverse supérieur s'étendant entre les deux montants latéraux verticaux. Cette face avant technique peut aussi supporter les projecteurs avant du véhicule.

Il est usuel qu'un projecteur avant se fixe notamment d'une part au montant latéral vertical de la FAT qui lui est adjacent, et d'autre part à l'aile avant en vis-à-vis. Le projecteur comprend en général un support de fixation qui comporte des pattes d'accostage, des pattes inférieures et supérieures, les unes se fixant audit montant de la FAT et les autres se fixant à l'aile.

Le projecteur comprend une glace de protection qui est usuellement en polycarbonate recouvert d'un revêtement de protection contre le rayonnement ultraviolet de la lumière naturelle, dit revêtement anti-UV, pour éviter son vieillissement prématuré. Il convient ainsi d'éviter de rayer ce revêtement anti-UV lors du montage du projecteur, car toute rayure peut créer une amorce de pelage du revêtement, et entraîner le vieillissement prématuré de la glace.

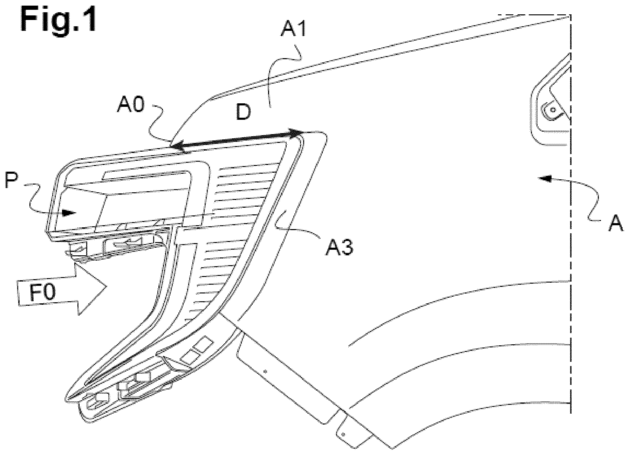

En référence à Fig.1, certaines ailes A peuvent comporter une partie supérieure avec une partie avancée A1 comprenant une extrémité en pointe A0 qui présente une forme « agressive », et sous laquelle doit passer le projecteur P lors de son montage pour qu'il soit inséré depuis l'avant (flèche F0) dans l'espace latéral ouvert vers l'avant qui a une forme sensiblement triangulaire délimitée par la surface inférieure de la partie avancée d'aile et la portion d'aile contigüe avec une surface avant plus ou moins oblique A3. La longueur « D » de cette partie avancée A1 de la partie supérieure de l'aile peut être par exemple de l'ordre de 230 millimètres. Cette longueur « D », qui correspond à la longueur d'insertion du projecteur P, augmente donc le risque de rayer le revêtement anti-UV quand le projecteur passe au niveau de la pointe d'aile A0.

Ce risque de rayure est d'autant plus important pour un projecteur de taille et/ou de poids relativement élevés. Par exemple, un projecteur peut avoir une longueur de 560 mm et une hauteur de 400 mm, et un poids de 5 kg.

L'opérateur, qui monte manuellement le projecteur, peut difficilement visualiser simultanément les pattes d'accostage (relatives à l'aile et à la FAT) du fait de la taille importante du projecteur, tout en prenant garde à ne pas toucher la pointe d'aile. Le poids du projecteur induit de la fatigue pour l'opérateur, et engendre des risques de manipulation approximative, et donc de toucher la pointe de l'aile. L'invention vise à remédier aux inconvénients cités. Elle vise à faciliter le montage d'un projecteur en partie latérale avant d'un véhicule automobile, entre l'aile adjacente et le montant latéral adjacent de la face avant technique.

A cet effet, l'invention fournit un système de montage d'un projecteur en partie latérale avant d'un véhicule automobile, pour insérer le projecteur entre l'aile adjacente et le montant latéral vertical adjacent de la face avant technique (FAT), dans un espace latéral ouvert à l'avant de l'aile et sur une longueur d'insertion définie par la longueur d'une partie avancée de la partie supérieure que comprend l'aile.

Ledit système comprend :
- des premiers éléments de guidage, les uns portés par un support de fixation que comprend ledit projecteur et d'autres portés par l'aile adjacente et ayant des premières formes complémentaires de guidage selon les directions verticale et longitudinale,
- des deuxièmes éléments de guidage, les uns portés par le support de fixation du projecteur et d'autres portés par le montant latéral vertical adjacent de la FAT et ayant des deuxièmes formes complémentaires de guidage selon les directions verticale et longitudinale,
et de sorte que, lors du montage du projecteur de l'avant vers l'arrière selon ladite longueur d'insertion, lesdites premières et lesdites deuxièmes formes complémentaires de guidage créent un espacement entre l'extrémité de la partie avancée de la partie supérieure de l'aile et la partie du projecteur située en vis-à vis, et le projecteur est en appui sur au moins un desdits premiers éléments de guidage portés par l'aile adjacente et sur au moins un desdits deuxièmes éléments de guidage portés par le montant latéral vertical adjacent de la FAT. Les premières formes complémentaires de guidage entre au moins un des premiers éléments de guidage porté par le projecteur et au moins un autre porté par l'aile, ainsi que les deuxièmes formes complémentaires de guidage entre au moins un des deuxièmes éléments de guidage porté par le projecteur et au moins un autre porté par le montant latéral vertical adjacent de la FAT, permettent ainsi de guider le projecteur au montage en appui et en l'éloignant suffisamment de la pointe de l'aile pour éviter que cette dernière abîme la surface du projecteur.

Avantageusement, la forme de guidage de l'un des premiers éléments de guidage et/ou la forme de guidage de l'un des deuxièmes éléments de guidage comportent une extrémité arrière configurée pour ajuster la position finale du projecteur selon la direction verticale, entre la partie supérieure du projecteur et la surface inférieure de la partie avancée de la partie supérieure de l'aile située en vis-à vis, en fin de montage du projecteur, en particulier pour pouvoir rapprocher le projecteur de la partie avancée de l'aile suivant la direction verticale.

En particulier, l'un desdits premiers éléments de guidage porté par le projecteur est un élément latéral de direction transversale porté par le côté externe du support de fixation du projecteur et l'autre desdits premiers éléments de guidage porté par l'aile est un élément de direction longitudinale.

En particulier, l'un desdits deuxièmes éléments de guidage porté par le projecteur est un élément latéral de direction transversale porté par le côté interne du projecteur et l'autre desdits deuxièmes éléments de guidage porté par le montant latéral vertical adjacent de la FAT est un élément de direction longitudinale.

Selon un mode de réalisation préféré, l'élément de guidage desdits premiers éléments de guidage porté par le support de fixation du projecteur est une première patte de guidage, proximale de l'aile, dont une forme de guidage est un pion de guidage dirigé vers l'aile, et l'élément de guidage desdits premiers éléments de guidage porté par l'aile comprend une forme de guidage complémentaire qui est une fente de guidage allongée sensiblement suivant la direction transversale Y, réceptrice du pion de guidage. Ladite fente de guidage a une partie principale ouverte à l'avant et de hauteur constante, correspondant sensiblement au diamètre du pion. En outre, la fente de guidage a une inclinaison montante (direction Z) de l'avant vers l'arrière, de sorte que le pion de guidage du projecteur vient reposer sur le bord inférieur de la fente, pour le suivre au moins sur la longueur de la partie principale. Avantageusement, ladite fente de guidage a une extrémité arrière dont l'ouverture est sensiblement orientée vers le haut de ladite fente (direction Z) et d'une hauteur supérieure à celle de la partie principale permettant d'ajuster la position finale du projecteur. En particulier, le pion de guidage du projecteur vient reposer sur le bord inférieur de la fente, pour le suivre sur la longueur de la partie principale jusqu'à atteindre la partie d'extrémité arrière de la fente.

En particulier, ladite fente de guidage portée par l'aile est située sur une extension inférieure de l'aile à laquelle se fixe la patte de guidage adjacente du support de fixation du projecteur.

Selon un mode de réalisation préféré, l'élément de guidage desdits deuxièmes éléments de guidage porté par le support de fixation du projecteur est une patte de guidage orientée sensiblement suivant la direction transversale dont une forme de guidage est une rainure de guidage, et l'élément de guidage desdits deuxièmes éléments de guidage porté par le montant latéral vertical adjacent de la FAT est une rampe de guidage allongée suivant la direction longitudinale (X), ladite rainure de guidage comportant une forme de guidage intérieure qui est complémentaire de la forme du bord latéral adjacent de ladite rampe de guidage, la rainure étant prolongée par une branche supérieure transversale qui vient, au montage du projecteur, en appui sur la surface supérieure de la rampe.

L'invention a également pour objet un procédé de montage d'un projecteur en partie latérale avant d'un véhicule automobile, pour insérer le projecteur entre l'aile adjacente et le montant latéral vertical adjacent de la face avant technique (FAT) du véhicule, dans un espace latéral ouvert à l'avant de l'aile et sur une longueur d'insertion définie par la partie avancée de la partie supérieure que comprend l'aile, dans lequel on utilise un système de montage tel que décrit précédemment, et dans lequel :
1/ on dispose simultanément, à l'avant dudit espace latéral ouvert :
   - un élément de guidage des premiers éléments de guidage porté par le support de fixation du projecteur, en appui sur un élément de guidage desdits premiers éléments de guidage porté par l'aile adjacente, et
   - un élément de guidage des deuxièmes éléments de guidage porté par le support de fixation du projecteur, en appui sur un élément de guidage desdits deuxièmes éléments de guidage porté par le montant latéral vertical adjacent de la FAT, puis
2/ on pousse le projecteur ainsi guidé en appui de l'avant vers l'arrière sur ladite longueur d'insertion.

Avantageusement dans une étape suivante, on ajuste la position finale du projecteur, en particulier quand la forme de guidage de l'un des premiers éléments de guidage et/ou la forme de guidage de l'un des deuxièmes éléments de guidage comporte une extrémité arrière configurée pour ajuster la position finale du projecteur selon la direction verticale, entre ladite partie supérieure du projecteur et la surface inférieure de la partie avancée de la partie supérieure de l'aile en fin de montage du projecteur.

D'autres particularités et avantages de l'invention ressortiront à la lecture de la description faite ci-après de plusieurs modes de réalisation particuliers de l'invention, donnés à titre indicatif mais non limitatifs, en référence aux dessins annexés sur lesquels :
[Fig. 1] est une vue en perspective d'un agencement en partie avant gauche d'un véhicule automobile d'un projecteur de l'art antérieur monté avec une aile avec une partie avancée au-dessus du projecteur.
[Fig. 2] est une vue, en perspective partielle depuis l'avant gauche, illustrant un mode de réalisation d'un système de montage d'un projecteur en partie latérale avant d'un véhicule automobile conformément à l'invention.
[Fig. 3] est une vue en perspective depuis l'avant gauche du projecteur du système de montage représenté en figure 2.
[Fig. 4A] est une vue, en perspective de trois-quarts depuis la droite du véhicule, illustrant une partie du système de montage représenté en figure 2 à 3.
[Fig. 4B] est une vue schématique, en coupe sensiblement transversale (plan YZ), de deux éléments de guidage de la partie du système de montage de la figure 4A.
[Fig. 5A] est une vue, en perspective de trois-quarts depuis la gauche du véhicule, illustrant une autre partie du système de montage représenté en figures 2 à 4.
[Fig. 5B] est une vue schématique, en coupe sensiblement longitudinale (plan XZ), de deux éléments de guidage de la partie du système de montage de la figure 5A.
[Fig. 6] représente une vue, en perspective de trois-quarts depuis l'avant gauche du véhicule, illustrant le projecteur une fois monté suivant le système de montage représenté en figures 2 à 5
[Fig. 7] est une vue en perspective d'un repère orthonormé classique XYZ d'un véhicule automobile.

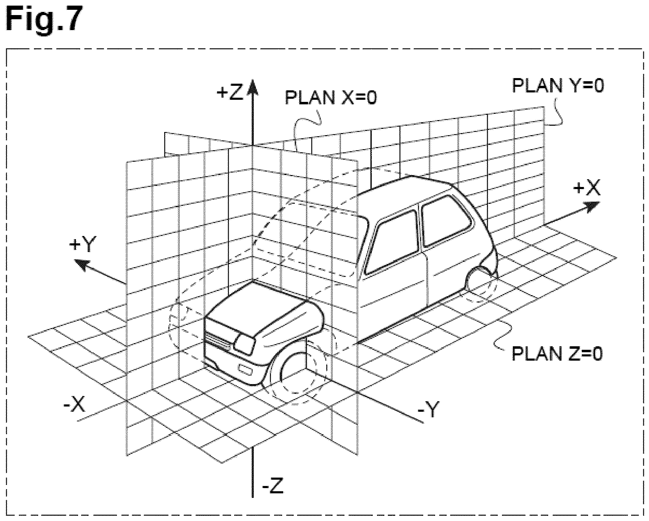

Les orientations exprimées dans la description sont données en référence à un repère orthonormé XYZ d'un véhicule automobile, dans lequel les axes X, Y, Z, correspondent respectivement à l'axe longitudinal (d'avant en arrière), transversal (orienté vers la droite du véhicule) et vertical du véhicule (orienté du bas vers le haut), comme représenté en figure 7.

Les orientations de l'agencement qui va être décrit font donc référence à ces orientations du véhicule, les termes avant, arrière, et supérieur, inférieur faisant référence aux directions respectivement avant, arrière, et supérieure, inférieure du véhicule, lorsque le projecteur est monté sur le véhicule.

Les termes « intérieur » et « extérieur » font référence respectivement à l'intérieur et à l'extérieur du compartiment moteur fermé par un capot.

Il est rappelé que le terme « externe » fait référence à une position orientée vers et à proximité d'un bord latéral du véhicule par rapport au centre du véhicule, et le terme « interne » fait référence à une position orientée vers le centre du véhicule (plan Y=0 sur la figure 7).

La figure 1 a été commentée en introduction pour décrire la problématique d'un agencement d'un projecteur de l'art antérieur monté avec une aile avec une partie avancée au-dessus du projecteur en partie latérale avant d'un véhicule automobile.

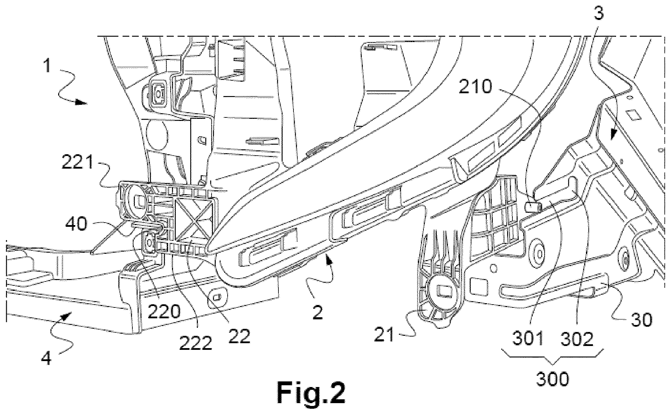

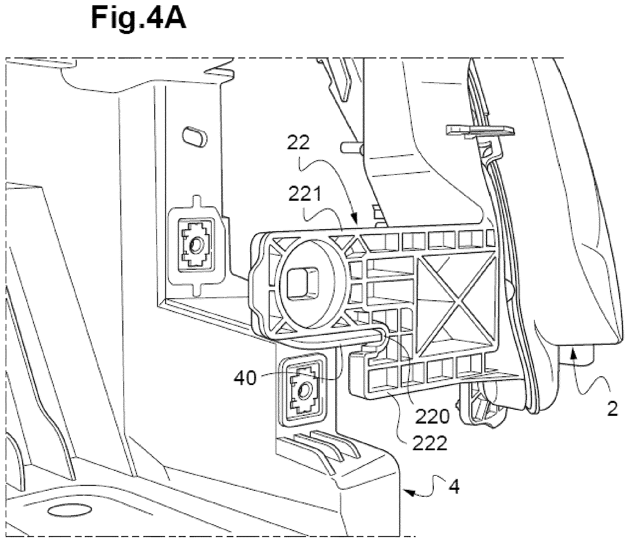

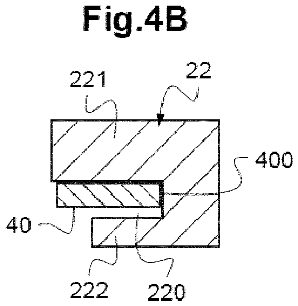

Les figures 2 à 6 qui illustrent un système de montage 1 d'un projecteur 2, en partie latérale avant d'un véhicule automobile conformément à l'invention, vont être commentées ensemble. Seul le côté gauche du véhicule est illustré, le côté droit du véhicule étant équipé du même système de montage du projecteur droit.

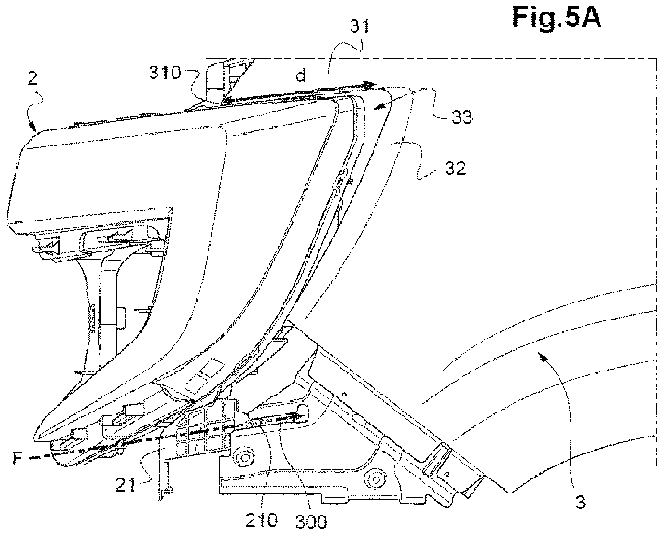

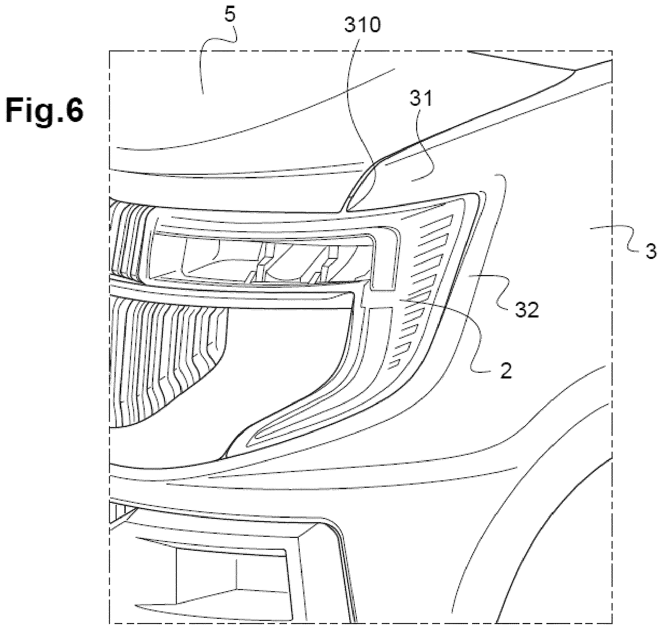

Le système de montage 1 d'un projecteur 2 comprend une aile 3 avec une extension inférieure avant 30 et un montant vertical latéral 4 de la face avant technique (FAT) du véhicule. L'aile 3 a une partie supérieure comportant une partie avancée 31 venant vers le bord avant du capot 5, cette partie avancée d'aile ayant une extrémité avant en pointe 310, donc de forme pouvant être « agressive » au montage du projecteur 2 (Fig. 6). La longueur « d » de cette partie avancée 31 de l'aile avec l'extrémité en pointe 310 correspond à la longueur d'insertion du projecteur 2 dans l'espace ouvert 33 à l'avant de l'aile, de forme sensiblement triangulaire délimitée par la surface inférieure de la partie avancée d'aile 31 et la portion d'aile contigüe avec une surface avant oblique 32 (Fig. 5A).

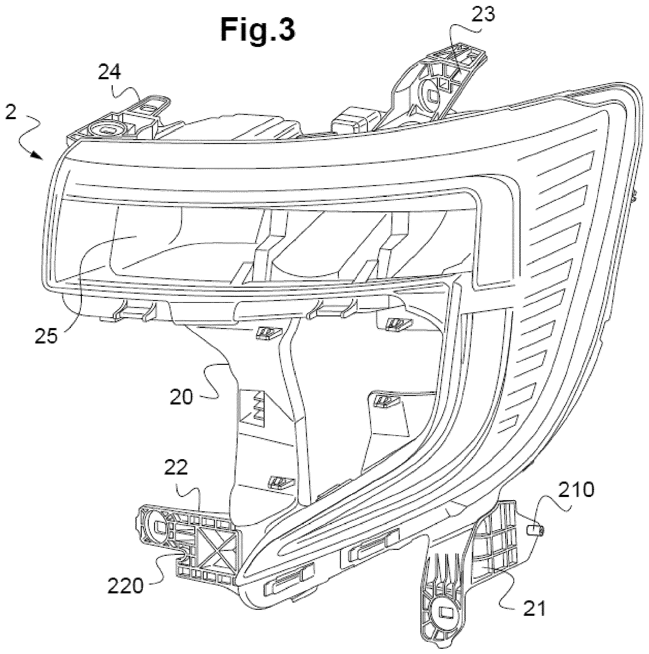

Le projecteur 2 comprend un support de fixation 20 qui comporte une patte de guidage inférieure 22 du côté interne, côté proximal du montant latéral vertical 4 de la FAT, configurée pour venir en contact avec ce montant 4, et une patte de guidage inférieure 21 de l'autre côté (côté externe, côté proximal de l'aile), configurée pour venir en contact avec l'aile 2. Ces pattes de guidage constituent aussi les pattes de fixation inférieures du projecteur respectivement au montant 4 de la FAT et à l'aile. Le support de fixation 20 du projecteur comprend aussi deux pattes de fixation en sa partie supérieure 23, 24, de part et d'autre du support, visibles sur la figure 3, correspondant à des pattes de fixation supérieures connues respectivement à la FAT et à l'aile.

Ce support de fixation 20 du projecteur comporte en général, et selon l'exemple, un logement récepteur des éléments d'éclairage tels que ampoules ou LED. Ce support de fixation supporte en sa surface, la glace de protection 25 du projecteur (voir [Fig. 2]) en polycarbonate revêtue d'un traitement anti-UV.

Du côté interne, la patte de guidage inférieure 22 est orientée sensiblement suivant la direction transversale Y, et comporte une rainure de guidage 220, de forme intérieure complémentaire de la forme du bord latéral adjacent 400 d'une rampe de guidage 40 allongée suivant la direction longitudinale (direction X), que comprend le montant 4 de la FAT. Cette patte de fixation inférieure 22 a une forme sensiblement en U dont la branche supérieure transversale 221 vient, au montage, reposer sur la surface supérieure de la rampe 40, sa longueur (direction Y) étant en outre supérieure à la largeur de la rampe de sorte que l'appui du projecteur sur la rampe est bien maintenu. L'intérieur courbe du U, autrement dit la rainure 220 qui est ouverte vers la rampe, suit le bord latéral adjacent 400 de la rampe, selon la pente de la rampe, montante de l'avant vers l'arrière, au montage du projecteur, et la branche inférieure 222 se plaçant sous ce bord latéral adjacent 400 de la rampe sans entraver le déplacement en translation du projecteur 2 vers l'arrière.

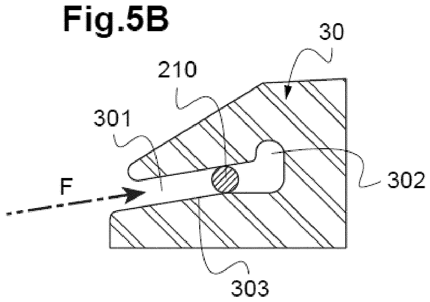

Du côté externe, la patte de guidage inférieure 21 proximale de l'aile 3 comporte un pion de guidage 210 dirigé vers l'aile 3. L'extension inférieure 30 de l'aile comporte une fente de guidage 300 allongée sensiblement suivant la direction transversale Y, réceptrice du pion 210. Ladite fente de guidage 300 a une partie principale 301 ouverte à l'avant et de hauteur constante, correspondant sensiblement au diamètre du pion 210. Ladite fente 300 a une extrémité arrière 302 remontante, l'ouverture étant sensiblement orientée vers le haut (direction Z), c'est-à-dire que cette extrémité 302 est d'une hauteur supérieure à celle de la partie principale 301. En outre, la fente de guidage 300 a une inclinaison montante (direction Z) de l'avant vers l'arrière (Fig. 5B), de pente similaire à celle de la rampe de guidage 40 portée par le montant 4 de la FAT, du côté interne du projecteur 2. Le pion de guidage 210 a une forme cylindrique et s'insère totalement dans la fente de guidage 300 au montage du projecteur 2, et il vient reposer sur le bord inférieur 303 de la fente, pour le suivre sur la longueur de la partie principale 301 jusqu'à atteindre la partie d'extrémité remontante 302. Ledit bord inférieur 303 de ladite fente 300 a une longueur au moins sensiblement égale à la longueur « d » de la partie avancée 31 de la partie supérieure de l'aile avec l'extrémité en pointe 310, longueur qui correspond à la longueur d'insertion du projecteur.

Lorsqu'un opérateur monte le projecteur 2 entre le montant latéral vertical 4 de la FAT et l'aile 3, dans l'espace ouvert 33, de forme sensiblement triangulaire sous la partie avancée 31 avec l'extrémité en pointe 310 de la partie supérieure de l'aile, il place le projecteur 2 de sorte que la branche supérieure 221 de la patte de guidage inférieure 22 adjacente à la FAT soit en appui sur la rampe 40 portée par le montant de la FAT et que le pion de guidage 210 de la patte de guidage inférieure 21 adjacente à l'aile soit en appui sur le bord inférieur 303 de la fente de guidage 300 de l'aile. La surface de la partie supérieure de la glace 25 du projecteur est donc suffisamment espacée de la pointe 310 de l'avancée de l'aile 31, d'un espacement, par exemple de quelques millimètres, pour que l'opérateur ne risque pas de toucher cette surface de la glace 25 du projecteur. L'opérateur fait alors glisser le projecteur 2 depuis l'avant vers l'arrière du véhicule (Fig. 5B, flèche F) simultanément sur la partie principale 301 de la fente de guidage 300 de l'aile et sur la rampe 40 du montant de FAT, la surface de la partie supérieure du projecteur passant au niveau de la pointe d'aile 310 restant espacée de la pointe d'aile 310 au fur et à mesure de l'introduction du projecteur dans l'espace ouvert 33 sur la longueur de la partie avancée de l'aile 31. Quand le pion de guidage 210 arrive dans l'extrémité arrière 302 remontante de la fente de guidage 300, l'opérateur peut ajuster la position finale du projecteur, en déplaçant le projecteur dans le sens vertical (direction Z+), pour rapprocher la partie supérieure du projecteur de la surface inférieure de la partie avancée d'aile 31 afin que le projecteur occupe sa place finale ([Fig. 6]).

Pendant le montage, les pattes de fixation supérieures 23, 24 du support de fixation du projecteur sont aussi mises en place de sorte à venir jusqu'à leurs surfaces d'accueil respectives.

Le mouvement du projecteur est ainsi contrôlé au moins dans la direction verticale sur sa longueur d'insertion, ce qui permet de limiter fortement le risque de rayure sur la glace du projecteur pendant son montage.

## Revendications

1. Système de montage (1) d'un projecteur en partie latérale avant d'un véhicule automobile, pour insérer le projecteur (2) entre l'aile adjacente (3) et le montant latéral vertical adjacent (4) de la face avant technique, dite FAT, dans un espace latéral (33) ouvert à l'avant de l'aile (3) et sur une longueur d'insertion (d) définie par la longueur d'une partie avancée (31) de la partie supérieure que comprend l'aile, ledit système comprenant :
- des premiers éléments de guidage (210, 300), les uns portés par un support de fixation (20) que comprend ledit projecteur et d'autres par l'aile adjacente (3) et ayant des premières formes complémentaires de guidage (210, 300) selon les directions verticale et longitudinale,
- des deuxièmes éléments de guidage (22, 40), les uns portés par le support de fixation (20) du projecteur et d'autres par ledit montant latéral vertical adjacent (4) de la FAT et ayant des deuxièmes formes
complémentaires de guidage (220, 400) selon les directions verticale et longitudinale, et de sorte que, lors du montage du projecteur de l'avant vers l'arrière (du véhicule) selon ladite longueur d'insertion, lesdites premières et lesdites deuxièmes formes complémentaires de guidage créent un espacement entre l'extrémité de la partie avancée de la partie supérieure de l'aile et la partie du projecteur située en vis-à vis, et le projecteur est en appui sur au moins un desdits premiers éléments de guidage portés par l'aile adjacente et sur au moins un desdits deuxièmes éléments de guidage portés par le montant latéral vertical adjacent de la FAT.

2. Système de montage d'un projecteur selon la revendication 1, **caractérisé en ce qu'**au moins la forme de guidage de l'un des premiers éléments de guidage et/ou la forme de guidage de l'un des deuxièmes éléments de guidage comportent une extrémité arrière (302) configurée pour ajuster la position finale du projecteur selon la direction verticale, entre la partie supérieure du projecteur et la surface inférieure de la partie avancée (31) de la partie supérieure de l'aile située en vis-à vis, en fin de montage du projecteur.

3. Système de montage d'un projecteur selon la revendication 2, **caractérisé en ce que** l'un desdits premiers éléments de guidage porté par le projecteur est un élément latéral de direction transversale (210) porté par le côté externe du support de fixation du projecteur et l'autre desdits premiers éléments de guidage porté par l'aile est un élément de direction longitudinale (300).

4. Système de montage d'un projecteur selon l'une quelconque des revendications 1 à 3, **caractérisé en ce que** l'un desdits deuxièmes éléments de guidage porté par le projecteur est un élément latéral de direction transversale (22) porté par le côté interne du projecteur et l'autre desdits deuxièmes éléments de guidage porté par le montant latéral vertical adjacent (4) de la FAT est un élément de direction longitudinale (40).

5. Système de montage d'un projecteur selon l'une quelconque des revendications 1 à 4, **caractérisé en ce que** l'élément de guidage desdits premiers éléments de guidage porté par le support de fixation du projecteur est une première patte de guidage (21), proximale de l'aile 3, dont une forme de guidage est un pion de guidage (210) dirigé vers l'aile (3), et l'élément de guidage desdits premiers éléments de guidage porté par l'aile comprend une forme de guidage complémentaire qui est une fente de guidage (300) allongée sensiblement suivant la direction transversale Y, réceptrice du pion de guidage (210), et ladite fente de guidage (300) a une partie principale ouverte (301) à l'avant et de hauteur constante, correspondant sensiblement au diamètre du pion (210), et la fente de guidage (300) a une inclinaison montante de l'avant vers l'arrière, de sorte que le pion de guidage (210) du projecteur vient reposer sur le bord inférieur (303) de la fente, pour le suivre au moins sur la longueur de ladite partie principale (301).

6. Système de montage d'un projecteur selon la revendication 5, **caractérisé en ce que** ladite fente de guidage (300) portée par l'aile est située sur une extension inférieure (30) de l'aile à laquelle se fixe la patte de guidage (21) adjacente du support de fixation du projecteur.

7. Système de montage d'un projecteur selon les revendications 5 à 6, **caractérisé en ce que** ladite fente de guidage a une extrémité arrière (302) dont l'ouverture est sensiblement orientée vers le haut de la fente et d'une hauteur supérieure à celle de ladite partie principale (301).

8. Système de montage d'un projecteur selon l'une quelconque des revendications 1 à 7, **caractérisé en ce que** l'élément de guidage desdits deuxièmes éléments de guidage porté par le support de fixation du projecteur est une patte de guidage (22) orientée sensiblement suivant la direction transversale (Y) dont une forme de guidage est une rainure de guidage (220), et l'élément de guidage desdits deuxièmes éléments de guidage porté par le montant latéral vertical adjacent (4) de la FAT est une rampe de guidage (40) allongée suivant la direction longitudinale (X), ladite rainure de guidage (220) comportant une forme de guidage intérieure qui est complémentaire de la forme du bord latéral adjacent (400) de ladite rampe de guidage, ladite rainure (220) étant prolongée par une branche supérieure transversale (221) qui vient, au montage du projecteur, en appui sur la surface supérieure de la rampe (40).

9. Procédé de montage d'un projecteur en partie latérale avant d'un véhicule automobile, pour insérer le projecteur (2) entre l'aile adjacente (3) et le montant latéral vertical adjacent (4) de la face avant technique, dite FAT, du véhicule, dans un espace latéral (33) ouvert à l'avant de l'aile et sur une longueur d'insertion (d ) définie par la longueur de la partie avancée (31) de la partie supérieure que comprend l'aile, dans lequel on utilise un système de montage selon l'une des revendications 1 à 8, et comprenant les étapes suivantes:
1/ on dispose simultanément, à l'avant dudit espace latéral ouvert (33):
- un élément de guidage des premiers éléments de guidage porté par le support de fixation du projecteur, en appui sur un élément de guidage desdits premiers éléments de guidage porté par l'aile adjacente, et
- un élément de guidage des deuxièmes éléments de guidage porté par le support de fixation du projecteur, en appui sur un élément de guidage desdits deuxièmes éléments de guidage porté par le montant latéral vertical adjacent de la FAT,
puis
2/ on pousse le projecteur ainsi guidé en appui de l'avant vers l'arrière sur ladite longueur d'insertion.

10. Procédé de montage d'un projecteur selon la revendication 8, dans lequel dans une étape suivante des étapes 1 et 2, on ajuste la position finale du projecteur (2).
